Europäisches Patentamt

European Patent Office

Office européen des brevets

(11) Numéro de publication: **0 172 113**
**A2**

# (12) DEMANDE DE BREVET EUROPEEN

(21) Numéro de dépôt: **85401647.4**

(22) Date de dépôt: **14.08.85**

(51) Int. Cl.⁴: **G 05 D 7/01**
**G 05 D 16/06**

(30) Priorité: **16.08.84 FR 8412856**

(43) Date de publication de la demande:
**19.02.86 Bulletin 86/8**

(84) Etats contractants désignés:
**BE CH DE FR GB IT LI NL**

(71) Demandeur: **SAUNIER DUVAL EAU CHAUDE
CHAUFFAGE - SDECC
"Les Miroirs" 18 Avenue d'Alsace
F-92400 Courbevoie(FR)**

(72) Inventeur: **De Lannoy, André
Stinval 38
B-4960 Louveigne(BE)**

(74) Mandataire: **Lepeudry-Gautherat, Thérèse et al,
CABINET ARMENGAUD JEUNE CASANOVA et
LEPEUDRY 23 boulevard de Strasbourg
F-75010 Paris(FR)**

(54) Régulateur de débit d'eau réglable par mécanisme de commande à membrane différentielle pour appareil de production d'eau chaude par le gaz.

(57) Dispositif additionnel au régulateur de débit d'eau. L'organe obturateur est formé de deux parties réglables en hauteur l'une par rapport à l'autre par le fait que le piston mobile (15) jouant le rôle d'obturateur est vissé sur l'entretoise (22) de liaison avec la membrane 3, et manoeuvré par une clé (28) extérieure au mécanisme.

Application aux chauffe-eau, chauffe-bains à puissance variable.

EP 0 172 113 A2

./...

**0172113**

L'invention qui se rapporte à un mécanisme de commande gaz à membrane différentielle pour appareils de production d'eau chaude par le gaz concerne précisément un dispositif additionnel au dispositif régulateur de débit d'eau, permettant de limiter ce débit pour s'affranchir des variations de pression du réseau.

La plupart des appareils de ce type utilisent un régulateur de débit d'eau qui comporte une membrane se déplaçant sous l'effet d'une différence de pression créée par le passage de l'eau dans un dispositif du genre venturi, ainsi qu'un organe obturateur dont l'élément mobile est solidaire des déplacements de la dite membrane. Pour obtenir un débit constant malgré de larges variations possibles de la pression amont, on connait des dispositifs obturateurs hydrauliquement équilibrés en forme de piston mobile dont la tête forme clapet d'obturation et dont la jupe de forme extérieure cylindrique coulisse avec jeu à l'intérieur d'une fourrure cylindrique fixe ; la tête de ce piston est percée d'un orifice qui permet de réaliser l'équilibre des pressions entre le dessus et le dessous. La liaison mécanique entre le piston et la membrane est assurée par une entretoise ou une barre de liaison. Dans les appareils à puissance variable, c'est à dire qui permettent de pouvoir effectuer des puisages d'eau chaude aussi bien à tout petit débit qu'à gros débit sans qu'il en résulte une variation notable de la température, une manette été/hiver corrige la variation dûe à la température de l'eau à l'entrée de l'appareil. Mais cette action corrige uniquement la zone de régulation proportionnelle et n'empêche pas l'utilisateur d'ouvrir en grand le robinet de puisage, ce qui donne alors une eau insuffisamment chaude.

L'invention apporte une solution à ce problème en ce que les deux parties, qui constituent l'organe obturateur, que sont le piston mobile et l'entretoise de liaison avec la membrane sont réglables en hauteur l'une par rapport à l'autre, la tête de piston étant vissée sur la partie solidaire de la membrane et manoeuvrable de l'extérieur par une manette ou un système analogue.

D'autres caractéristiques et avantages de l'invention ressortiront de la description qui va suivre d'un exemple de réalisation en référence aux dessins annexés qui représentent :

figure 1 une vue d'ensemble en coupe du mécanisme
figure 2 une vue du régulateur dans une autre position de réglage.

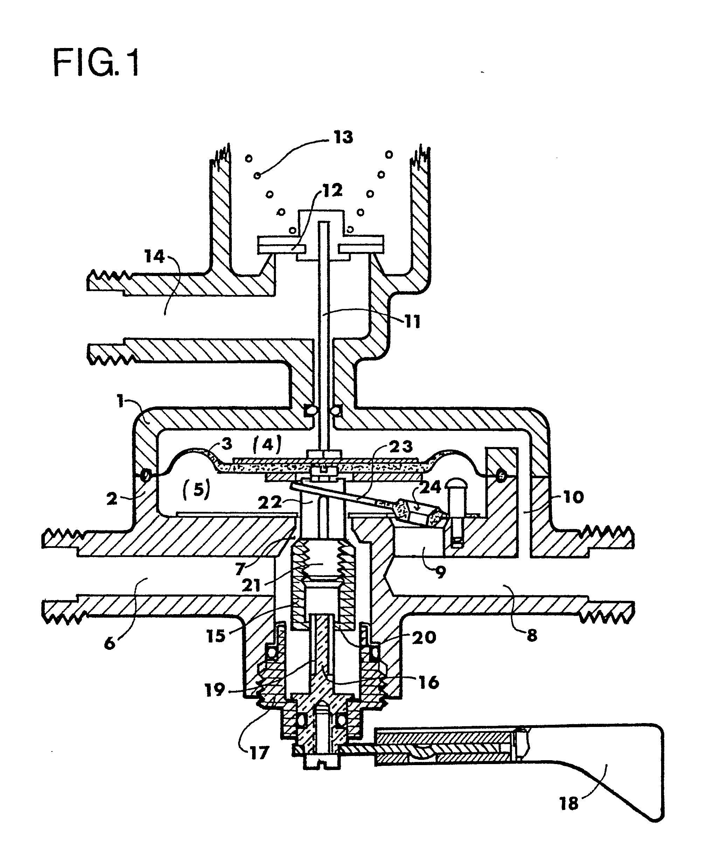

Le boîtier du mécanisme représenté à la figure 1 est constitué d'une coquille supérieure 1 et d'une coquille inférieure 2 entre lesquelles est tendue une membrane différentielle 3 délimitant les deux chambres d'eau (4) et (5). Un conduit d'arrivée d'eau 6 communique avec la chambre (5) par un orifice 7 ; cette chambre (5) est elle-même raccordée au conduit de sortie d'eau 8 par un orifice calibré 9 prévu à la base de la coquille 2. Un petit conduit 10 équilibre la pression entre la chambre (4) et le conduit 8. La membrane 3 est liée par une tige 11 au clapet 12 d'admission du gaz aux brûleurs non représentés. Le clapet 12 est maintenu fermé contre son siège par le ressort 13 et obture le conduit d'arrivée de gaz 14.

L'organe obturateur du régulateur de débit d'eau est un piston 15 mobile dans un puits vertical à l'aplomb de l'orifice 7, piston qui est profilé et obture plus ou moins cet orifice. Le piston 15 se présente comme un manchon coulissant sur une tige de guidage 16 placée verticalement à la base du puits qui obture un bouchon 17.

Cette tige de guidage 16 traverse de façon étanche le bouchon 17 et peut être manoeuvrée en rotation par la clé 18. Elle porte en outre deux méplats latéraux 19 en appui sur le bord intérieur 20 du piston 15, grâce auxquels la tige 16 peut entraîner le piston dans son mouvement de rotation.

La partie supérieure interne du piston 15 porte un filetage qui coopère avec une partie filetée 21 prévue à la base de l'entretoise de liaison 22 grâce à laquelle le mouvement du piston est solidarisé avec celui de la membrane 3.

Enfin une languette pivotante 23 munie d'une ouverture calibrée 24 placée vis à vis de l'orifice 9 est en appui sur un rebord de l'entretoise 22 dont elle suit le mouvement.

Dans le cas de la figure 1 montrant l'appareil au repos, la tête du piston 15 est représentée totalement vissée sur l'entretoise de liaison 22. La distance piston-membrane est minimum et la section de passage de l'eau par l'orifice 7 est également minimum ce qui veut dire que la levée de la membrane 3 et l'ouverture du clapet 12 sera réduite ce qui revient à limiter au maximum le débit d'eau pouvant traverser l'appareil lors d'un puisage.

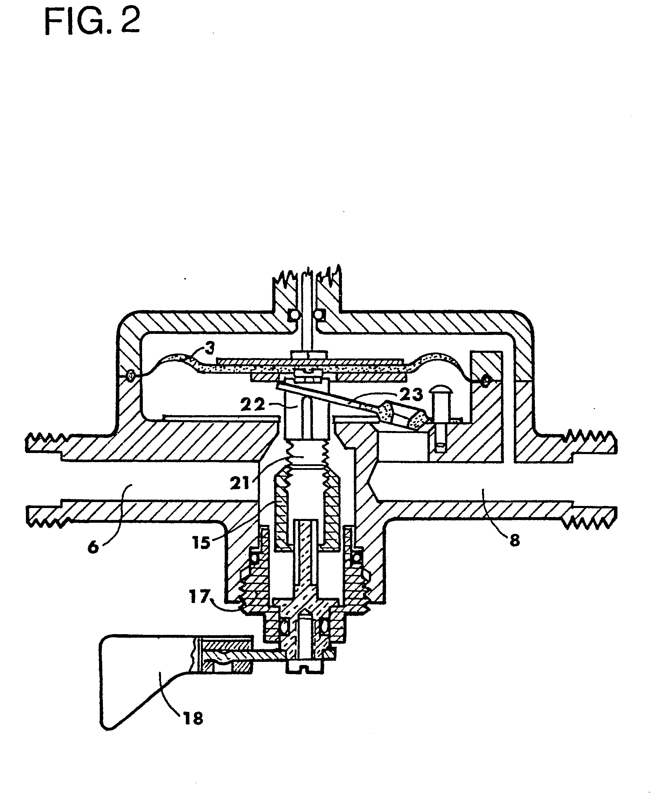

La figure 2 montre que par rotation de la clé 18, qui a entrainé dans son mouvement le piston 15, on a dévissé le piston de la partie filetée 21, et augmenté la distance piston-membrane ce qui veut dire que la section de passage d'eau par l'orifice 7 peut être plus importante que dans l'exemple précédent, de même que le débit traversant l'appareil.

Revendications.

1°/ Régulateur de débit d'eau pour mécanisme de commande gaz à membrane différentielle comportant un organe obturateur constitué d'un piston mobile solidaire des mouvements de la membrane, qui selon la position de cette dernière obture plus ou moins l'orifice de passage d'eau entre le conduit d'arrivée et la chambre de pression située sous la membrane, et constitué aussi d'une entretoise de liaison du piston avec la membrane caractérisée par le fait que le piston mobile (15) et son entretoise (22) de liaison forment deux parties à hauteur réglable l'une par rapport à l'autre, et que le réglage de cette hauteur du piston par rapport à la membrane (3) est assuré par un moyen mécanique extérieur au mécanisme.

2°/ Régulateur de débit d'eau selon la revendication 1 caractérisé par le fait que le piston (15) est fileté, qu'il coopère avec une partie filetée (21) prévue à la base de l'entretoise (22) de liaison avec la membrane (3) et qu'il est mis en rotation par la manoeuvre d'une manette (18) extérieure au mécanisme.

3°/ Régulateur de débit d'eau selon la revendication 2 caractérisé par le fait que le piston (15) coulisse verticalement sur une tige de guidage (16) solidaire de la manette (18,) cette tige étant munie de méplats (19) en appui sur les bords internes (20) du piston (15.)

FIG.1

FIG. 2